# EUROPÄISCHE PATENTSCHRIFT

(11) **EP 3 315 784 B1**
(45) Veröffentlichungstag und Bekanntmachung des Hinweises auf die Patenterteilung: **12.10.2022**
(21) Anmeldenummer: 16195617.2
(22) Anmeldetag: 25.10.2016
(51) Int. Cl.: F04D 13/08, F04D 15/00, F04D 15/02, G01F 23/28

(54) **TAUCHPUMPENAGGREGAT UND VERFAHREN ZUM BETREIBEN EINES TAUCHPUMPENAGGREGATES**
SUBMERSIBLE PUMP UNIT AND METHOD OF OPERATING A SUBMERSIBLE PUMP UNIT
GROUPE DE POMPAGE SUBMERSIBLE ET PROCÉDÉ DE FONCTIONNEMENT D'UN GROUPE DE POMPAGE SUBMERSIBLE

(43) Veröffentlichungstag der Anmeldung: 02.05.2018
(73) Patentinhaber: Grundfos Holding A/S, 8850 Bjerringbro (DK)
(72) Erfinder: Fosmark, Peter, 8600 Silkeborg (DK); Dyrbye, Karsten, 8600 Silkeborg (DK); Munk, Flemming, 8800 Viborg (DK)
(74) Vertreter: Patentanwälte Vollmann Hemmer Lindfeld Partnerschaft mbB

(56) Entgegenhaltungen:
- EP-A1- 2 741 059
- WO-A2-2012/173551
- US-A1- 2012 084 055
- US-A1- 2015 322 771
- US-A1- 2016 033 468
- CHRISTOPHER P NEMARICH: "Time Domain Reflectometry Liquid Level Sensors", IEEE INSTRUMENTATION & MEASUREMENT MAGAZINE, IEEE SERVICE CENTER, PISCATAWAY, NJ, US, Bd. 4, Nr. 4, 1. Dezember 2001 (2001-12-01), Seiten 40-44, XP011092036, ISSN: 1094-6969

## Beschreibung

Die Erfindung betrifft ein Tauchpumpenaggregat zur Anordnung in einem Schacht oder Behältnis gemäß dem Oberbegriff des Anspruchs 1 sowie ein Verfahren zum Betreiben eines Tauchpumpenaggregats gemäß dem Oberbegriff des Anspruchs 12.

Tauchpumpenaggregate sind üblicherweise mit einem wasserdichten bzw. gekapselten Motor ausgestattet und werden direkt im Wasser bzw. in einer zu fördernden Flüssigkeit eingesetzt, d. h. darin eingetaucht, so dass sie zumindest im Betrieb von der zu pumpenden Flüssigkeit umgeben sein sollten, da es sonst beispielsweise zu einem schädlichen Trockenlauf der Pumpe kommen könnte.

Daher ist es, wenn die Tauchpumpe beispielsweise in einer zu pumpenden Flüssigkeit eingetaucht ist, beim Betrieb der Pumpe wichtig, den Wasserpegel der die Pumpe umgebenden Flüssigkeit kontinuierlich zu erfassen. Aber auch aus anderen Gründen kann es zweckmäßig oder erforderlich sein, den Flüssigkeitsstand der die Pumpe umgebenen Flüssigkeit zu kennen.

Aus WO 2012/173551 A2 zählt eine Anordnung zum Stand der Technik, bei welcher ein Tauchpumpenaggregat bestehend aus Elektromotor und davon angetriebener Pumpe in einem Schacht angeordnet ist und über ein Kabel mit einer externen Steuereinheit verbunden ist, welche ihrerseits über ein weiteres Kabel mit einem Sensor verbundden ist, welcher den Flüssigkeitsstand im Schacht erfasst, sodass die Pumpe in Abhängigkeit des Flüssigkeitsstandes gesteuert werden kann.

Sensorik zur Erfassung des Flüssigkeitsstandes in einem Schacht arbeitet nach unterschiedlichen physikalischen Prinzipien und zählt zum Stand der Technik. Aus EP 2 741 059 A1 ist es bekannt, dass die Erfassung eines Flüssigkeitsstandes in einem Behältnis mittels Zeitbereichsreflektrometrie insbesondere dann problematisch ist, wenn der Leitungsabstand zwischen dem zu messenden Pegel und der das Signal erzeugenden und auswertenden Elektronik sehr groß ist. Zur Lösung dieser Problematik wird eine vergleichsweise aufwendige Sondenanordnung in Form einer Stange, welche den gesamten zu erfassenden Wasserpegelbereich durchsetzt und ein spezielles Kalibrierungskabel vorgeschlagen.

Im Stand der Technik ist es unter anderem bekannt, einen Schwimmerschalter in der Tauchpumpe vorzusehen, der bei Erreichen eines Minimumpegels den Antrieb abschaltet, um Trockenlauf zu vermeiden. Weiterhin kann ein derartiger Schwimmerschalter auch der Flüssigkeitsstandsregulierung dienen.

Aus US 2012/00884055 A1 sowie US 2015/0322771 A1 zählt es zum Stand der Technik, mittels einer Elektronikeinheit unter Verwendung der Zeitbereichsreflektometrie und des Stromversorgungskabels einer Tauchpumpe den Wasserstand innerhalb des Förderschachts zu bestimmen. Dabei ist die Elektronikeinheit am oberen Ende des Schachts und das Pumpenaggregat unten innerhalb des Schachts angeordnet, sodass die Stromversorgung über die Elektronikeinheit und von dort zum Pumpenaggregat erfolgt.

Die im Stand der Technik bekannten Lösungen sind jedoch aufwändig oder störanfällig und verursachen hohe Herstellungs- und Wartungskosten.

Ausgehend von dem letztgenannten Stand der Technik liegt der vorliegenden Erfindung die Aufgabe zugrunde, ein Tauchpumpenaggregat und ein Verfahren zum Betreiben eines solchen Tauchpumpenaggregats bereitzustellen, mittels welchen auf einfache, kostengünstige und zuverlässige Weise der Flüssigkeitsstand einer Flüssigkeit zu messen ist, in welcher das Tauchpumpenaggregat angeordnet ist.

Diese Aufgabe wird durch ein Tauchpumpenaggregat zur Anordnung in einem Schacht oder Behältnis mit den Merkmalen gemäß Anspruch 1 sowie durch ein Verfahren zum Betreiben eines Tauchpumpenaggregats gemäß Anspruch 12 gelöst. Vorteilhafte Weiterbildungen der Erfindung sind in den Unteransprüchen, der nachfolgenden Beschreibung und der Zeichnung angegeben.

Tauchpumpenaggregat im Sinne der vorliegenden Erfindung kann jede in einem Schacht, Behältnis oder Bohrloch eingesetzte Pumpe sein, also typischerweise eine Abwasserpumpe oder eine Bohrlochpumpe. Es kann sich jedoch auch eine Pumpe zur Förderung aus einem Tank oder dergleichen handeln.

Das erfindungsgemäße Tauchpumpenaggregat ist zur Anordnung in einem Schacht oder Behältnis bestimmt und mit einer Pumpe und einem diese antreibenden Elektromotor sowie mit einem Kabel zur Stromversorgung versehen, welches zur obenseitigen Herausführung aus dem Schacht oder Behältnis und zur Verbindung mit einer Stromquelle außerhalb des Schachts oder Behältnisses ausgebildet ist. Das Pumpenaggregat weist eine Elektronikeinheit auf, welche ausgelegt ist, um ein Signal in das Kabel zu übertragen und ein Reflexionssignal an der Oberfläche der im Schacht oder Behältnis befindlichen Flüssigkeit zu erfassen und hieraus mittels Zeitbereichsreflektrometrie einen Flüssigkeitsstand in dem Schacht oder Behältnis zu bestimmen. Gemäß der erfindungsgemäßen Konfiguration wird auf einfache und somit kostengünstige Weise erreicht, dass der Wasserstand der Flüssigkeit in dem Schacht oder Behältnis, in welchem das Tauchpumpenaggregat angeordnet ist, zuverlässig erfasst werden kann. Hierzu sind keine zusätzlichen Sensoren oder Schwimmerschalter notwendig, denn die Messung wird über das ohnehin vorhandene Stromkabel durchgeführt.

Zum Tauchpumpenaggregat im Sinne der anmeldungsgemäßen Erfindung gehören nicht nur die Pumpe und der diese antreibende Elektromotor, sondern auch eine in oder an dem Aggregatgehäuse angeordnete Elektronikeinheit sowie ein Kabel zur Stromversorgung.

Unter obenseitiger Herausführung des Kabels im Sinne der vorliegenden Erfindung ist nicht notwendigerweise die Herausführung des Kabels an der Oberseite des Schachtes zu verstehen, vielmehr kann dieses auch seitlich quer zu Schachtwandung und versetzt dazu erfolgen, allerdings zweckmäßigerweise oberhalb des maximal zu erwartenden Flüssigkeitsstandes des Schachtes oder Behältnisses.

Grundgedanke der Erfindung ist es somit, auf Sensorik zur Flüssigkeitsstandserfassung im Schacht oder Behältnis weitgehend zu verzichten und durch eine entsprechende Erweiterung der in der Regel ohnehin vorhandenen Elektronikeinheit ein Signal in das ebenfalls ohnehin vorhandene Versorgungskabel einzuspeisen um ein Reflektionssignal, welches an der Oberfläche der im Schacht oder Behältnis befindlichen Flüssigkeit entsteht, zu erfassen und hieraus mittels der Zeitbereichsreflektrometrie den aktuellen Flüssigkeitsstand zu bestimmen. Der besondere Vorteil der erfindungsgemäßen Lösung liegt auch darin, dass diese in der Regel an üblichen Tauchpumpenaggregaten vorgesehen werden kann, ohne diese konstruktiv ändern zu müssen, lediglich seitens der Elektronikeinheit sind entsprechende Ausgestaltungen zu treffen.

Gemäß der Erfindung ist die Elektronikeinheit, welche zur Erzeugung des Signals und Empfang des Reflektionssignals und somit zur Bestimmung des Flüssigkeitsstandes vorgesehen ist, innerhalb eines die Pumpe und den Antriebsmotor aufnehmenden Gehäuses oder an der Außenseite dieses Gehäuses angeordnet.

Gemäß einer bevorzugten Ausführungsform der Erfindung ist das Kabel ein Standard-Stromkabel, insbesondere aus Kupfer. Dies ist eine besonders kostengünstige Variante, da die Kabel nicht auf irgendeine besondere Art und Weise dazu ausgelegt sein müssen, als Sensoren zu fungieren, sondern lediglich um einen Arbeitsstrom zum Betreiben des elektrischen Motors der Tauchpumpe bereitzustellen. Die Signalein- und auskoppelung kann kapazitiv erfolgen.

Bei Verwendung eines Standardstromkabels muss das Signal in dieses eingekoppelt und das empfangene Reflektionssignal aus diesem ausgekoppelt werden. Etwaige Kommunikationssignale beispielsweise zwischen einer externen, d.h. außerhalb des Schachtes angeordneten Motorsteuerung und der Elektronikeinheit sind ebenfalls über dieses Kabel zu führen, beispielsweise mittels einer an sich bekannten Powerline-Kommunikation, wie sie aus dem Bereich der Netzwerktechnik bekannt ist. Einfacher und störsicherer ist eine Variante, bei welcher in dem Kabel neben den Stromleitern mindestens ein gesonderter Leiter vorgesehen ist, welcher einerseits für die zur Zeitbereichsreflektometrie erforderlichen Signale und Reflektionssignale vorgesehen ist und welcher andererseits vorzugsweise auch zur Datenkommunikation mit einer externen Motorsteuerung verwendet wird. Die für die Messung des Flüssigkeitsstandes erforderlichen Signale sind dann völlig unabhängig von der Bestromung und den damit typischerweise behafteten Oberwellen/Störsignalen. Auch die Datenkommunikation kann über einen solchen gesonderten Leiter wesentlich einfacher und stabiler erfolgen, sei es durch entsprechende Modulation der Signale oder bevorzugt durch zeitliche Trennung zwischen Messsignal und Kommunikationssignal.

Gemäß einer weiteren bevorzugten Ausführungsform ist zumindest ein Marker, vorzugsweise ein metallischer Ring an dem Kabel angeordnet. Marker im Sinne der anmeldungsgemäßen Erfindung kann jede geeignete Ausbildung am Kabel sein, welche geeignet ist, die kapazitiven Eigenschaften in diesem Bereich zu verändern und somit ein Reflektionssignal zu erzeugen. Dies kann beispielsweise durch eine Verdickung in der Isolierung, die Eingliederung eines Metallabschnittes oder aber bevorzugt durch Anordnung eines metallischen Rings gebildet sein. Es können ein oder mehrere weitere Marker bzw. metallische Ringe in einem vorbestimmten Abstand zu demMarker bzw. metallischen Ring und/oder dem Pumpenaggregat an dem Kabel angeordnet sein. Das Anordnen von einem oder mehreren Markern, insbesondere metallischen Ringen an dem Kabel bewirkt, dass sich das dielektrische Feld im Inneren des Kabels ändert und somit eine noch genauere Messung ermöglicht wird. Es kann also mit Hilfe dieser Marker/metallischen Ringe nicht nur ein Reflektionssignal von der Oberfläche der Flüssigkeit sondern auch ein Reflektionssignal dieser Marker/Ringe erhalten werden, wodurch die Messgenauigkeit erhöht werden kann und eine Kalibrierung möglich ist. Zu diesem Zweck wird der oder die Marker/Ringe in einem vorgegebenen Abstand (zueinander und zum Pumpenaggregat) angeordnet. Solche metallischen Ringe können auf einfache Weise mechanisch außen am Kabel befestigt werden oder gegebenenfalls bei Verwendung eines Spezialkabels auch im Mantel integriert sein.

Besonders vorteilhaft ist es, wenn das durch die Elektronikeinheit in das Kabel übertragene Signal eine codierte Pulsfolge ist. Hierdurch kann beispielsweise ein Rauschen, welches durch einen Frequenzumformer oder andere Vorrichtungen, welche Rauschen verursachen, unterdrückt bzw. kompensiert werden.

Vorzugsweise besteht das Kabel aus einem mit dem Pumpenaggregat verbundenen ersten Kabelabschnitt und einem mit der Stromquelle zu verbindenden zweiten Kabelabschnitt, wobei der erste Kabelabschnitt und der zweite Kabelabschnitt an einer Verbindungsschnittstelle mittels eines Verbindungselements miteinander verbunden sind. Eine solche Anordnung hat den Vorteil, dass unabhängig von der erforderlichen Kabellänge, das Pumpenaggregat mit dem Anschlusskabel immer gleich ausgebildet sein kann, lediglich der zweite Kabelabschnitt, welcher von der Verbindungsschnittstelle zum Stromanschluss führt, längenkonfektioniert sein muss.

Gemäß einer vorteilhaften Weiterbildung der Erfindung weist das Pumpenaggregat, insbesondere die Elektronikeinheit, Mittel zum Detektieren eines Trockenlaufs der Pumpe auf, welche in der Elektronikeinheit gebildet sind und welche die mit der Zeitbereichsreflektrometrie ermittelten Daten verwenden. Der Trockenlauf kann beispielsweise bei Unterschreiten eines Mindestflüssigkeitsstandes festgestellt werden, bei dem dann vorzugsweise eine automatische Abschaltung erfolgt. Es ist also hierzu nicht erforderlich, zu detektieren, dass die Pumpe tatsächlich trockenläuft. Es ist auch möglich die Zeitbereichsreflektrometrie zusammen mit einer konventionellen Trockenlaufdetektion zu kombinieren, z. B. Detektieren mittels Motorstromüberwachung. Alternativ oder zusätzlich können mittels der Elektronikeinheit gemäß einer Weiterbildung der Erfindung das Eindringen von Flüssigkeit in das Verbindungselement oder Kabel ermittelt werden, da sich hierdurch das kapazitive Verhalten der Bauteile zueinander ändert und dies durch geeignete Ausgestaltung der Elektronikeinheit ermittelbar ist. Dabei kann die Verbindungsschnittstelle an einem kurzen Kabelabschnitt in der Nähe des Pumpengehäuses liegen oder aber auch unmittelbar am Pumpengehäuse, dann liegt der erste Kabelabschnitt ausschließlich innerhalb des Gehäuses.

Es ist auch vorteilhaft, wenn das Pumpenaggregat weiterhin Mittel zum Bestimmen einer dielektrischen Veränderung an der Verbindungsschnittstelle des ersten und zweiten Kabelabschnitts aufweist und/oder Mittel zum Kompensieren der dielektrischen Veränderung an der Verbindungsschnittstelle des ersten und zweiten Kabelabschnitts. Somit kann durch entsprechende Ausbildung der elektronischen Baueinheit auf einfache Weise diese Schnittstelle überwacht werden und sich etwaig ergebende Veränderungen z. B. im Kontaktwiderstand, bei den Messungen berücksichtigt bzw. kompensiert werden.

Die Elektronikeinheit liegt erfindungsgemäß innerhalb des die Pumpe und den Elektromotor aufnehmenden Gehäuses, kann jedoch auch an der Außenseite dieses Gehäuses in einem gesonderten Gehäuse angeordnet sein. Letzteres bietet sich insbesondere zum Nachrüsten vorhandener Pumpenkonstruktionen an, ohne den Grundaufbau ändern zu müssen.

Vorteilhaft ist zumindest an einem Ende des Kabels, welches an die Stromquelle anzuschließen ist, ein Kabelendfilter vorgesehen. Ein solcher Filter, der typischerweise ein Tiefpass ist, hält die hochfrequenten Oberwellen seitens der Stromquelle, insbesondere bei Verwendung eines Frequenzumformers, aber auch Störsignale des Motors/der Motorelektronik zurück. Mittels des Kabelendfilters kann darüber hinaus mittels Zeitbereichsreflektrometrie auch das Ende des Kabels ermittelt werden. Vorzugsweise wird ein solcher Filter nicht nur am stromquellenseitigen Ende des Kabels sondern auch am motorseitigen Ende des Kabels vorgesehen, und zwar vor der Elektronikeinheit, um auch motorseitig Oberwellen/Störungen auszuschalten. Diese Filter sind im Hinblick auf die Messsignale abzustimmen sowie auch im Hinblick auf die Kommunikationssignale, wenn Kommunikationsdaten ebenfalls über die stromführende Leiter übertragen werden. Die Kommunikationssignale werden vorteilhaft mittels einer Kommunikationseinheit in das Kabel eingespeist und aus dem Kabel empfangen, die Teil der Elektronikeinheit bildet.

Zweckmäßig ist eine Kalibrierung der Messeinrichtung nicht nur vor der ersten Messung, sondern nach Möglichkeit in regelmäßigen Abständen durchzuführen, da sich das in der Flüssigkeit befindliche Kabel durch äußere Einflüsse, beispielsweise Anlagerung von Algen oder Kleintieren im Laufe der Zeit verändern kann. Dabei erfolgt die Kalibrierung mithilfe der am Kabel angebrachten Marker, deren Abstand zur Pumpe bekannt ist und die ungeachtet des Umgebungsmediums ein detektierbares Reflektionssignal erzeugen. Dabei werden zweckmäßigerweise die ermittelten Werte gespeichert, sodass ein Vergleich mit den Werten der davorliegenden Kalibrierungen möglich ist und somit Langzeitveränderungen aufgrund äußerer Einflüsse ermittelt und berücksichtigt werden können. Gemäß einer vorteilhaften Weiterbildung dieses Verfahrens können damit auch Eindringen von Flüssigkeit in das Kabel oder in ein Verbindungselement einer Verbindungsschnittstelle des Kabels ermittelt werden, hierzu ist in der Elektronikeinheit zweckmäßig ein Mikroprozessor sowie ein Speicher vorhanden, der mittels implementierter Software diese Zustände anhand von zuvor ermittelten Kennwerten erfasst und gegebenenfalls über die Kommunikationseinheit dies signalisiert oder einen Alarm auslöst.

Zwischen dem Kabelendfilter und der Stromquelle können weiterhin ein Frequenzumformer und die Motorsteuerung vorgesehen sein.

Weiterhin wird gemäß der Erfindung ein Verfahren zum Betreiben eines Tauchpumpenaggregats bereitgestellt, wobei das Verfahren einen Schritt des Messens eines Flüssigkeitsstandes in einem Schacht oder Behältnis, in welchem das Pumpenaggregat angeordnet ist, umfasst, wobei der Schritt des Messens des Flüssigkeitsstandes mittels Zeitbereichsreflektrometrie durchgeführt wird.

Vorzugsweise umfasst der Schritt des Messens des Flüssigkeitsstandes ein Übertragen eines Signals, insbesondere eines Signals mit einer Pulssequenz mit einer Amplitude von 5 V in ein Stromkabel, welches das Pumpenaggregat mit einer Stromquelle verbindet, und ein Erfassen einer Änderung des übertragenen Signals an der Oberfläche der Flüssigkeit in dem Behältnis, insbesondere an der Flüssigkeits-/Luft-Grenze.

Gemäß der Erfindung sendet die in dem Pumpenaggregat vorgesehene Elektronikeinheit das Signal an das Kabel und misst die Zeit, die benötigt wird, bis eine Änderung der Amplitude des Signals in dem Kabel auftritt und berechnet aus der gemessenen Zeit die Länge des Kabels von dem Pumpenaggregat bis zu der Flüssigkeits-/Luft-Grenze.

Vorteilhaft ist es, wenn der Schritt des Messens während eines Stillstands der Pumpe, während der erstmaligen Inbetriebnahme der Pumpe oder während des Betriebs der Pumpe durchgeführt wird. Wenn der Schritt des Messens durchgeführt wird, wenn die Pumpe angehalten wird bzw. nicht in Betrieb ist, wird vorteilhafterweise elektrisches Rauschen, welches durch den elektrischen Motor und/oder Frequenzumrichter beim Betrieb der Pumpe verursacht wird, vermieden und kann somit nicht das Messsignal beeinflussen.

Das Verfahren kann weiterhin einen Schritt des Detektierens eines Trockenlaufs der Pumpe umfassen. Das Detektieren des Trockenlaufs der Pumpe kann entweder beim Unterschreiten eines vorbestimmten Mindestflüssigkeitsstands erfolgen oder aber wenn das zu detektierende Reflektionssignal gar nicht ermittelbar ist. Letztere Ausgestaltung schützt das Pumpenaggregat vor nicht definierten Zuständen oder bei Teildefekten der Elektronikeinheit.

Bei Schmutzwasserpumpen, bei welchen das Pumpenaggregat auf den Grund stehend angeordnet ist und es darauf ankommt, die Flüssigkeit nach Möglichkeit bis zum Boden abzupumpen, also die Pumpe erst unmittelbar vor einem möglichen Trockenlauf abzuschalten, ist es zweckmäßig, das typischerweise an der Oberseite des Aggregatgehäuses austretende Kabel seitlich am Gehäuse nahe zur Aufstandsfläche zu führen um es dann um 180° nach oben zu richten. Mit einer solchen Kabelführung kann bei geeigneter Anordnung der vorerwähnten Marker und entsprechender Kalibrierung eine recht genaue Bestimmung des Flüssigkeitsstandes auch im Bereich der Höhe der Pumpe erfolgen. In einem solchen Fall ist dann eine Luft-Flüssigkeit Grenze zu detektieren anstelle der vermutlich häufiger auftretenden Flüssigkeit-Luft Grenze. Das Kabel wird z. B. mit einem ringförmigen Band oder einem Metall- oder Kunststoffring, der Kabel und Pumpengehäuse umschließt, an dem Pumpenaggregat fixiert.

Gelegentlich ist es erforderlich, bei der Kabelführung nicht direkt vom Pumpenaggregat das Kabel nach oben zu führen sondern zunächst einmal quer, d. h. horizontal oder schräg dazu. Der horizontale Teil des Kabels darf natürlich bei der Bestimmung des Flüssigkeitsstandes nicht mitgerechnet. Dies erfolgt vorteilhaft softwareimplementiert durch die Elektronikeinheit selbsttätig, wenn nämlich innerhalb der Elektronikeinheit festgestellt wird, dass der Flüssigkeitsstand von einem vorgegebenen Wert ad hoc auf Null abfällt. Dies kann bei ein- oder mehrfachen Vorkommen erkannt und dann bei späteren Messungen entsprechend berücksichtigt werden. Auch ist es denkbar, dass die Elektronikeinheit vorzugsweise über das Kabel selbst mittels einer Kommunikationsschnittstelle programmierbar ist, sodass der Servicetechniker vor Ort bei Einbau des Pumpenaggregates dies bereits eingeben und dies bei der Signalauswertung in der Elektronikeinheit berücksichtigt werden kann. Alternativ oder zusätzlich kann dieser Bereich auch durch einen am Kabel vorgesehenen Marker definiert werden beispielsweise durch zwei im geringem Abstand hintereinander angeordnete Ringe oder andere geeignete Marker.

Die Erfindung ist nachfolgend anhand eines in der Zeichnung dargestellten Ausführungsbeispiels näher erläutert. Es zeigen:
- Fig. 1: in stark vereinfachter schematischer Darstellung ein erfindungsgemäßes Tauchpumpenaggregat in einem flüssigkeitsgefüllten Schacht, wobei der Schacht im Schnitt dargestellt ist;
- Fig. 2A - 2D: Messdiagramme wie sie mit dem erfindungsgemäßen Verfahren bei unterschiedlichen Füllständen im Schacht innerhalb des Tauchpumpenaggregates erzeugt werden und auszuwerten sind,
- Fig. 3: eine Darstellung einer alternativen Ausgestaltung eines Tauchpumpenaggregates entsprechend Figur 1,
- Fig. 4: in schematischer Längsschnittdarstellung eine Bohrlochpumpe gemäß der Erfindung; und
- Fig. 5: ein Blockschaltbild einer Ausführungsvariante der Erfindung.

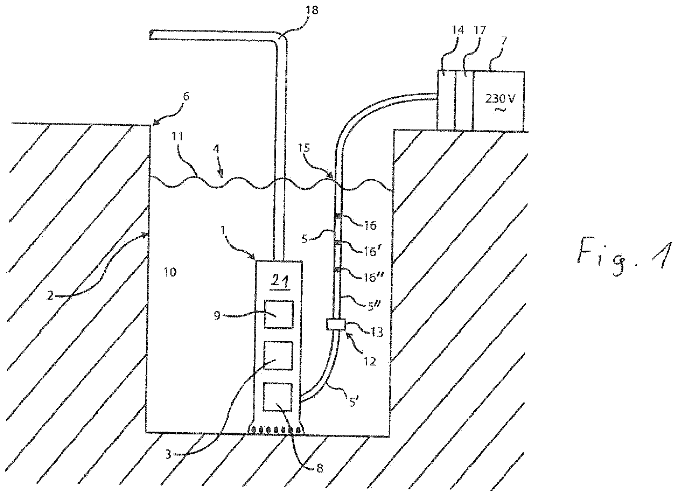

In Fig. 1 ist nicht nur ein Schacht 2 im Schnitt dargestellt, sondern auch ein sich darin befindliches Tauchpumpenaggregat 1. Der Schacht 2 ist mit einer Flüssigkeit, hier Wasser 10 gefüllt, und weist einen Flüssigkeitsstand 11 auf. Das Tauchpumpenaggregat 1, das hier vollständig von dem Wasser 10 umgeben ist, umfasst eine Pumpe 3 und einen Elektromotor 8, welcher die Pumpe 3 antreibt. Der Elektromotor 8 ist über ein Kabel 5 mit einer Stromquelle 7 verbunden, welche außerhalb des Schachts 2 angeordnet ist.

Das Kabel 5 weist einen ersten Kabelabschnitt 5' und einen zweiten Kabelabschnitt 5" auf, welche an einer Verbindungsschnittstelle 12 mittels eines Verbindungselements 13 miteinander verbunden sind, und kann eine Gesamtlänge von bis zu mehreren hundert Metern aufweisen. Typischerweise wird dabei der erste Kabelabschnitt 5', welcher direkt mit dem Pumpenaggregat 1 fest verbunden ist, herstellerseitig mit dem Pumpenaggregat 1 verbunden geliefert. Der zweite Kabelabschnitt 5" wird kundenindividuell bereitgestellt, also entsprechend der benötigten Länge konfektioniert. Wie in der Figur erkennbar ist, sind an dem Kabel 5, hier beispielhaft drei metallische Ringe 16, 16', 16" in einem vorbestimmten Abstand zueinander angeordnet. Die Ringe 16, 16', 16" ändern das dielektrische Feld in dem Kabel 5 und bilden Marker, die eine präzisiere Messung des Flüssigkeitsstand es ermöglichen

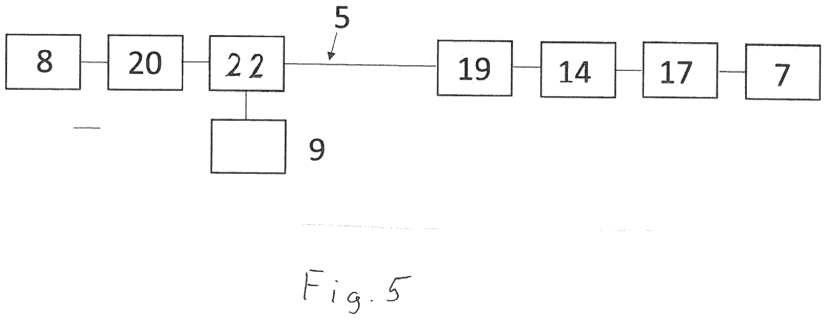

Das Kabel 5 wird an der Oberseite 6 des Schachts 2 aus diesem herausgeführt und ist somit außerhalb des Schachts 2 an die Stromquelle 7 bzw. über einen an der Stromquelle 7 vorgesehenen und in Figur 5 dargestellten Kabelendfilter 19 angeschlossen. Zwischen dem Kabelendfilter 19 und der Stromquelle 7 sind ferner ein Frequenzumformer 14 sowie eine Motorsteuerung 17 angeordnet.

Mit 18 ist eine Förderleitung des Pumpenaggregates1, gekennzeichnet, durch welche die aus dem Schacht 2 von der Pumpe 3 geförderte Flüssigkeit abgeführt wird.

Das Pumpenaggregat 1 umfasst weiterhin eine Elektronikeinheit 9. Diese Elektronikeinheit 9 ist auch ausgelegt zumDetektieren eines Trockenlaufs der Pumpe 3, und verwendet hierzu die mit der Zeitbereichsreflektrometrie ermittelten Daten sowie zum Bestimmen einer dielektrischen Veränderung an der Verbindungsschnittstelle 12 des ersten und zweiten Kabelabschnitts 5', 5"und und zum Kompensieren der dielektrischen Veränderung an der Verbindungsschnittstelle des ersten und zweiten Kabelabschnitts. Die Elektronikeinheit 9 ist somit ausgelegt, um ein Signal in das Kabel 5 einzuspeisen und ein Reflexionssignal an der Oberfläche 4 des im Schacht 2 befindlichen Wassers 10 zu erfassen und hieraus mittels Zeitbereichsreflektrometrie einen Flüssigkeitsstand 11 bzw. den Füllstand 11 in dem Schacht 2 zu bestimmen, wie im Folgenden im Detail beschrieben wird.

Während eines Stillstands der Pumpe 3 oder vor oder während der Erstinbetriebnahme der Pumpe 3, d. h . während der Frequenzumformer14 inaktiv ist und keinen Strom an den elektrischen Motor 8 Inneren der Pumpe 3 liefert, sendet die Elektronikeinheit 9 ein Signal in den Kupferdraht des Kabels 5 bzw. in die ersten und zweiten Kabelabschnitte 5', 5". Das Signal ist beispielsweise eine Pulssequenz mit einer Amplitude von 5 V. Die Elektronikeinheit 9 misst dann die Zeit bis eine Änderung der Amplitude des Signals auftritt. Diese Änderung tritt genau an der Stelle 15 auf, wo das Kabel 5 aus dem Wasser 10 austritt und dann von Luft umgeben ist. An genau diesem Punkt 15, nämlich am Übergang Wasser/Luft, ändern sich die dielektrischen Parameter im Inneren des Kabels 5 aufgrund einer Änderung in der kapazitiven Leckage von Wasser zu Luft, was wiederum eine Erhöhung der Signalamplitude auf dem Kabel bewirkt. Aus der Information, wann diese Änderung in der Amplitude aufgetreten ist, d. h. aus dem zeitlichen Abstand von einem Senden des Signals bis zum Auftreten der Änderung, welche in dem erfassten Reflexionssignal enthalten ist, kann die Länge des Kabels bis zur Elektronikeinheit 9 oder zum Motor 8 berechnet werden, was im Wesentlichen dem Flüssigkeitsstand 11 in dem Schacht 2 entspricht. Die Flüssigkeit, hier das Wasser 10, hat eine dielektrische Konstante, welche deutlich größer ist als diejenige der Luft oberhalb des mit Wasser 10 gefüllten Schachts 2.

Anstelle des Durchführens der oben beschriebenen Messung während eines Stillstands der Pumpe 3 kann sie jedoch auch durchgeführt werden, wenn die Pumpe 3 über den den Frequenzumformer 14 angesteuert, d. h. betrieben wird. Das Messsignal zum Bestimmen des Flüssigkeitsstandes, welches von der Elektronikeinheit 9 gesendet bzw. in das Kabel 5 eingespeist wird, ist dann ein kodiertes Signal und weist typischerweise eine Frequenz im Megahertz-Bereich auf. Durch Kodieren des Signals kann das Rauschen, welches durch den Frequenzumformer 14 oder andere Einrichtungen oder den Elektromotor 8 selbst verursacht wird, ausgeblendet werden.

Wie das Blockdiagramm gemäß Figur 5 verdeutlicht, ist die Elektronikeinheit 9 nicht in Serie, sondern parallel zur Stromversorgung zwischen Stromquelle 7 und Elektromotor 8 angeordnet, und zwar über ein Koppelglied 22. Die Ankopplung erfolgt über einen Y-Kondensator 22 mit einer Kapazität von 4,7 nF. Dabei erfolgt hierüber nicht nur die Ankopplung der Messsignale, d. h. das Aussenden einer Pulssequenz und Empfangen einer oder mehrerer Reflektionssignale, sondern auch die Datenübermittlung, d. h. die Übermittlung des in der Elektronikeinheit 9 ermittelten Füllstandes 11 an die Steuerung 17 des Elektromotors 8. Dabei erfolgt sowohl die Ein-und Auskopplung der Messsignale aus auch die der Datenkommunikation in einen stromführenden Leiter des das Pumpenaggregat mit Strom versorgenden Kabels 5. Die Datenkommunikation zwischen der Elektronikeinheit 9 und der Steuerung 17 erfolgt über ein CAN-Bus, kann jedoch auch über andere Kommunikationsprotokolle durchgeführt werden. Um die vom Elektromotor 8 ausgehenden Störsignale auszufiltern ist zwischen Elektromotor 8 und dem Koppelglied 22 ein Filter 20 angeordnet. Am anderen Ende ist der Kabelendfilter 19 angeordnet, der mögliche aus dem Netz oder dem Frequenzumrichter 14 kommende Störsignale ausfiltert.

Alternativ kann im Kabel 5 ein gesonderter Leiter vorgesehen sein, welcher ausschließlich für das Ein- und Auskoppeln der Messsignale sowie die Datenkommunikation bestimmt ist. Dann kann eine unmittelbare Einkopplung erfolgen, die Störfilter 19,20 können dann weitgehend entfallen. Die Elektronik beinhaltet hierzu eine in den Figuren nicht dargestellte Kommunikationseinheit.

Um die Qualität des gemessenen Signals und damit die Messung insgesamt weiter zu verbessern, kann der Elektromotor 8 während der Messung gestoppt werden, d. h. die Pumpe 9 wird antriebsfrei geschaltet. Hierbei wird ein elektrisches Rauschen, welches von dem Elektromotor 8 verursacht wird, vermieden, so dass das gemessene Signal, d. h. das Reflexionssignal, nicht dadurch beeinträchtigt wird.

Dabei wird mittels der Elektronikeinheit 9 nicht nur der Flüssigkeitsstand 11 im Schacht 2 detektiert, die Elektronikeinheit 9 ist vielmehr auch dazu ausgelegt, wenn der detektierte Flüssigkeitsstand einen minimalen Wert, der etwa dem der Bauhöhe des Pumpenaggregates 1 entspricht, unterschreitet oder wenn ein Flüssigkeitsstand gar nicht ermittelbar ist, die Pumpe 3, d. h. den Elektromotor 8 abzuschalten um auf diese Weise einen Trockenlauf zu verhindern. Hierdurch kann auf einen gesonderten Trockenlaufsensor vollständig verzichtet werden.

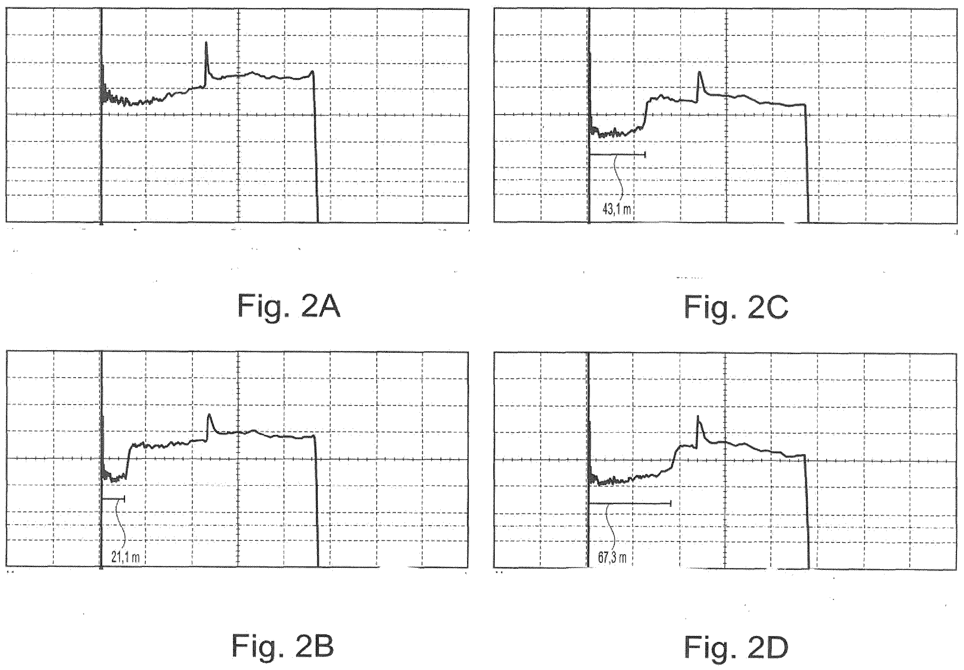

Fig. 2A bis 2D sind Diagramme von Messergebnissen bei verschiedenen Füllständen, wie beispielsweise einem Flüssigkeitsstand 11, wie in Fig. 1 dargestellt, welche mittels des vorbeschriebenen Verfahrens ermittelt wurden.

Es wurden Tests durchgeführt, welche zunächst in einem 70 m tiefen Schacht, wie beispielsweise dem in Fig. 1 dargestellten Schacht 2, durchgeführt wurden, wobei ein 150 m langes Stromkabel verwendet wurde, wie es normalerweise in derartigen Schachtanwendungen eingesetzt wird. Die überschüssige Kabellänge läuft dabei entlang der Bodenoberfläche außerhalb des Schachtes. Hierbei wurde eine 3 % Signalstufe an der Position gemessen, wo sich der Übergang von Wasser zu Luft bzw. umgekehrt von Luft zu Wasser befindet. Der gemessene Signalstufengradient nimmt mit dem Abstand des Flüssigkeitsstands 11 zum Pumpenaggregat 1 ab. Es sollte daher der Signalstufengradient dV/dt so groß wie möglich, d. h. so steil wie möglich, gehalten werden. Im Ausführungsbeispiel ist dV/ dt kleiner oder gleich 1 V pro Nanosekunde. Da die Wasserstandsmessung relativ zum Pumpenaggregat 1 durchgeführt wird, kann ein niedriger Flüssigkeitsstand 11 sehr zuverlässig und präzise bestimmt werden. Der Messfehler nimmt mit wachsendem Flüssigkeitsstand 11 zu, falls das Stromkabel nicht ausreichend definiert ist. Um den Messfehler insbesondere bei hohen Wasserständen zu verringern, besteht die Möglichkeit, Marker als Höhenindikatoren auf dem Stromkabel zu montieren, welche beispielsweise durch Hartschaum oder engsitzende Metallhülsen 16, 16', 16" realisiert werden können.

Die in den Figuren 2A, 2B, 2C und 2D dargestellten Messergebnisse, die jeweils die Signalamplitude(Spannung) über die Zeit darstellen, sind aus einer Anordnung entstanden, bei welcher die TDR-(Time-Domain Reflectometry) Messelektronik im Inneren der Pumpe 3 (siehe Fig. 1) angeordnet bzw. montiert ist. Wie hier erkannt werden kann, ist in Fig. 2A eine Messung dargestellt, welche bei einem Flüssigkeitsstand von 0 m oberhalb der Pumpe durchgeführt wurde. Dagegen bezieht sich Fig. 2B auf eine Messung mit einem Flüssigkeitsstand von 21,1 m Wasser oberhalb der Pumpe, Fig. 2C auf eine Messung mit einem Flüssigkeitsstand von 43,1 m Wasser oberhalb der Pumpe und Fig. 2D auf einen Flüssigkeitsstandvon 67,3 m Wasser oberhalb der Pumpe 3. Wie in den Fig. 2B bis 2D erkennbar ist, ist an dem Übergang Wasser/Luft ein sprunghafter Anstieg der Messkurve erkennbar, aus welchem die Höhe der Wassersäule bzw. der Flüssigkeitsstand dann abgeleitet wird.

Die erfindungsgemäße Konfiguration zur Bestimmung des Flüssigkeitsstands 11 in einem Schacht 2 oder Behälter, in welchem ein Tauchpumpenaggregat 1 angeordnet ist, bietet insgesamt neben den bereits genannten Vorteilen viele weitere Vorteile. Beispielsweise ergibt sich eine weitgehende Robustheit gegenüber externen Einflüssen. Toleranzen können entsprechend den Anforderungen durch Vorsehen von Referenzreflektoren/Markern an bekannten Positionen und/oder durch Vorsehen von entsprechender Information des Kabeltyps angepasst werden. Andererseits können mithilfe von Markern 16 und regelmäßig erfolgenden Kalibriervorgängen Veränderungen des Systems ermittelt werden, beispielsweise das Eindringen von Flüssigkeit in ein Verbindungselement 13 oder in das Kabel 15, Anlagerungen am Kabel 5, Beschädigungen des Kabels 5 und Trockenlauf der Pumpe. Das Signal/Rausch-Verhältnis kann verbessert werden, wenn der Strom für sehr kurze Zeitperioden, insbesondere so kurz, dass es nicht einmal den Elektromotor beeinträchtigt, ausgeschaltet wird. Wenn die Kabel bekannt sind, kann die variierende Geschwindigkeit des elektrischen Impulses voreingestellt werden.

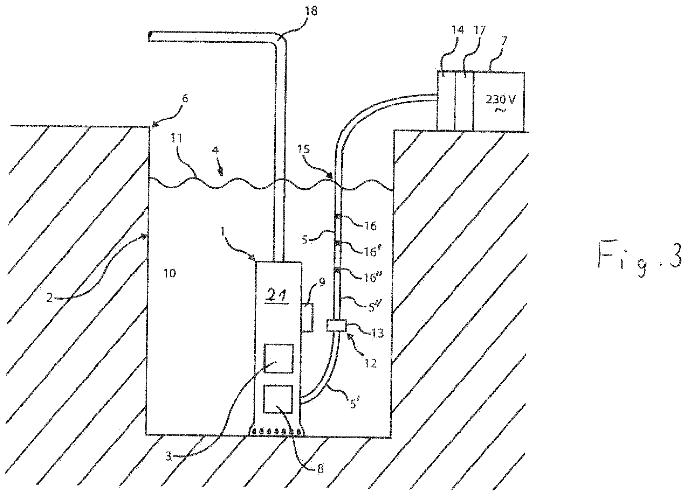

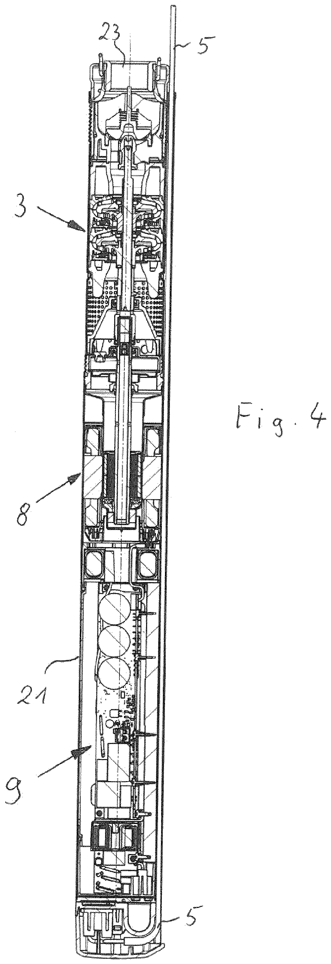

Bei dem anhand von Figur 1 dargestellten Pumpenaggregat 1 sind Elektromotor 8, Pumpe 3 und Elektronikeinheit 9 in einem gemeinsamen Gehäuse 21 angeordnet, aus welchem das Kabel nahe der bodenseitigen Aufstandsfläche austritt. Eine solche Ausgestaltung, wie sie anhand von Figur 4 für eine Bohrlochpumpe im Einzelnen dargestellt ist, ist bei Neukonstruktionen in der Regel zu bevorzugen. Hiervon unterscheidet sich die anhand von Figur 3 dargestellte Ausführungsvariante, bei welcher innerhalb des Aggregatgehäuses 21 lediglich die Pumpe 3 und der Elektromotor 8 sowie die gegebenenfalls dort befindlichen Teile der Motorelektronik angeordnet sind, jedoch die Elektronikeinheit 9 an der Außenseite des Gehäuses in einem gesonderten Gehäuse angeordnet ist. Eine solche Anordnung bietet sich an, um vorhandene Konstruktionen mit geringem Aufwand hinsichtlich der Flüssigkeitsstandsmessung nachzurüsten.

Bei der Anhand von Figur 4 dargestellten Bohrlochpumpe sind Elektromotor 8, Pumpe 3 und Elektronikeinheit 9 in einem zylindrischen Gehäuse 21 angeordnet, dabei ist die Elektronikeinheit 9 Teil der darin befindlichen Motorelektronik. Das Kabel 5 ist an der Unterseite des Gehäuses herausgeführt und seitlich des Gehäuses an diesem anliegend nach oben geführt. Innerhalb des Gehäuses 21 schließt sich an die Elektronikeinheit 9 nach oben der Elektromotor 8 an, welcher die darüber angeordnete hier zweistufige Kreiselpumpe 3 antreibt. Das Ansaugen der Flüssigkeit erfolgt durch Ausnehmungen in der Zylinderwand des Gehäuses 21 im Bereich zwischen Motor 8 und Pumpe 3, der Austritt über einen Austrittsstutzen 23 an der Oberseite des Gehäuses 21, an dem die Förderleitung 8 anschließt. Bei dieser Pumpe ist es zweckmäßig, einen ersten Marker oberhalb des Pumpengehäuses 21 am Kabel 5 vorzusehen, welcher den minimalen Füllstand repräsentiert, bei dessen Unterschreiten ein Trockenlauf festgestellt und das Pumpenaggregat abgeschaltet wird. Weitere Marker werden zweckmäßigerweise in deutlichem Abstand angebracht, um die Genauigkeit der Flüssigkeitsstandangabe mit zunehmenden Abstand von der Pumpe zu erhöhen.

Ein Kalibrieren der Messeinrichtung kann beispielsweise mit Hilfe der drei an der Außenseite des Kabels 5 angebrachten Marker in Form von Metallringen mit 16, 16' und 16" erfolgen. Der Abstand dieser Ringe zueinander und zur Pumpe ist zuvor vermessen worden, sodass beim Einkoppeln eines Messsignals in Form einer Pulssequenz in das Kabel 5 in zeitlichen Abständen Reflektionssignale von den Ringen 16, 16' und 16" erhalten werden. Die in diesem Zusammenhang gemessenen Laufzeiten werden dann mit den zuvor vermessenen Längen korreliert, wonach die Laufzeit eines Reflektionssignals an der Flüssigkeitsoberfläche 11 entsprechend bestimmt werden kann. Um über möglichst die gesamte Kabellänge eine genaue Messung zu erzielen, sind eine geeignete Anzahl von Markern in geeigneten Abständen am Kabel vorzusehen.

### Bezugszeichen

- 1: Tauchpumpenaggregat
- 2: Schacht
- 3: Pumpe
- 4: Wasseroberfläche
- 5: Kabel (5' erster Kabelabschnitt / 5" zweiter Kabelabschnitt)
- 6: Oberseite des Schachts
- 7: Stromquelle
- 8: Elektromotor
- 9: Elektronikeinheit
- 10: Wasser
- 11: Füllstand/Flüssigkeitsstand
- 12: Verbindungsschnittstelle
- 13: Verbindungselement
- 14: Frequenzumformer
- 15: Stelle
- 16, 16', 16": Ringe
- 17: Motorsteuerung
- 18: Förderleitung
- 19: Filter
- 20: Filter
- 21: Gehäuse
- 22: Koppelglied
- 23: Austrittstutzen

## Patentansprüche

1. Tauchpumpenaggregat (1) zur Anordnung in einem Schacht (2) oder Behältnis, mit einer Pumpe (3) und einem diese antreibenden Elektromotor (8), mit einem Kabel (5) zur Stromversorgung, welches zur obenseitigen Herausführung aus dem Schacht (2) oder Behältnis und zur Verbindung mit einer Stromquelle (7) außerhalb des Schachts (2) oder Behältnisses ausgebildet ist, wobei das Pumpenaggregat (1) eine Elektronikeinheit (9) umfasst, welche ausgelegt ist, um ein Signal in das Kabel (5) zu übertragen und ein Reflexionssignal an der Oberfläche (4) der im Schacht (2) oder Behältnis befindlichen Flüssigkeit (10) zu erfassen und hieraus mittels Zeitbereichsreflektrometrie einen Flüssigkeitsstand (11) in dem Schacht (2) oder Behältnis zu bestimmen, **dadurch gekennzeichnet, dass** die Elektronikeinheit (9) innerhalb eines die Pumpe (3) und den Elektromotor (8) aufnehmenden Gehäuses (21) oder an der Au-βenseite dieses Gehäuses (21) angeordnet ist.

2. Pumpenaggregat (1) nach Anspruch 1, **dadurch gekennzeichnet, dass** das Kabel (5) ein Standard-Stromkabel, insbesondere aus Kupfer, ist und die Signalein- und auskoppelung kapazitiv, vorzugsweise über einen Y-Kondensator (22) erfolgt.

3. Pumpenaggregat (1) nach Anspruch 1, **dadurch gekennzeichnet, dass** dem Kabel (5) neben den Stromleitern mindestens ein gesonderter Leiter für die zur Zeitbereichsreflektrometrie erforderlichen Signale und Reflektionssignale vorgesehen ist, welches vorzugsweise auch zur Datenkommunikation mit einer externen Motorsteuerung (14) verwendet wird.

4. Pumpenaggregat (1) nach einem der vorhergehenden Ansprüche, **dadurch gekennzeichnet, dass** zumindest ein mittels der Zeitbereichsreflektrometrie detektierbarer Marker (16), vorzugsweise ein metallischer Ring (16) an dem Kabel (5) angeordnet ist.

5. Pumpenaggregat (1) nach Anspruch 4, **dadurch gekennzeichnet, dass** zumindest ein weiterer Marker (16', 16") in einem vorbestimmten Abstand zu dem ersten Marker (16) an dem Kabel (5) angeordnet ist.

6. Pumpenaggregat (1) nach einem der Ansprüche 1 bis 5, **dadurch gekennzeichnet, dass** das durch die Elektronikeinheit (9) in das Kabel (5) übertragene Signal eine codierte Pulssequenz ist.

7. Pumpenaggregat (1) nach einem der Ansprüche 1 bis 6, **dadurch gekennzeichnet, dass** das Kabel (5) eine mit dem Pumpenaggregat (1) verbundenen ersten Kabelabschnitt (5') und einen mit der Stromquelle (7) zu verbindenden zweiten Kabelabschnitt (5") aufweist, wobei der erste Kabelabschnitt (5') und der zweite Kabelabschnitt (5") an einer Verbindungsschnittstelle (12) mittels eines Verbindungselements (13) miteinander verbunden sind.

8. Pumpenaggregat (1) nach Anspruch 7, **dadurch gekennzeichnet, dass** das Pumpenaggregat (1) Mittel zum Detektieren eines Trockenlaufs der Pumpe (3) und/oder des Eindringens von Flüssigkeit in das Verbindungselement (13) aufweist, welche in der Elektronikeinheit (9) gebildet sind und welche die mit der Zeitbereichsreflektrometrie ermittelten Daten verwenden.

9. Pumpenaggregat nach einem der Ansprüche 7 oder 8 **dadurch gekennzeichnet, dass** die Elektronikeinheit (9) weiterhin Mittel zum Bestimmen einer dielektrischen Veränderung an der Verbindungsschnittstelle (12) des ersten und zweiten Kabelabschnitts (5', 5") aufweist und/oder Mittel zum Kompensieren der dielektrischen Veränderung an der Verbindungsschnittstelle(12) des ersten und zweiten Kabelabschnitts (5', 5").

10. Pumpenaggregat (1) nach einem der Ansprüche 1 bis 8, **dadurch gekennzeichnet, dass** an einem Ende des Kabels (5), welches an die Stromquelle (7) anzuschließen ist, ein Kabelendfilter (19) vorgesehen ist und, dass zwischen dem Kabelendfilter (19) und der Stromquelle (7) ein Frequenzumformer (14) und/oder eine Motorsteuerung (17) vorgesehen ist.

11. Pumpenaggregat (1) nach einem der vorhergehenden Ansprüche, **dadurch gekennzeichnet, dass** die Elektronikeinheit (9) eine Kommunikationseinheit aufweist, über welche Kommunikationssignale in das Kabel (5) eingespeist und aus dem Kabel (5) empfangen werden können.

12. Verfahren zum Betreiben eines Tauchpumpenaggregats (1) gemäß einem der Ansprüche 1 bis 11, wobei das Tauchpumpenaggregat eine Pumpe (3) und einen diese antreibenden Elektromotor (8), eine Elektronikeinheit (9) und ein Kabel (5) zur Stromversorgung aufweist, welches zur obenseitigen Herausführung aus einem Schacht (2) oder Behältnis und zur Verbindung mit einer Stromquelle (7) außerhalb des Schachtes (2) oder Behältnisses ausgebildet ist, und die Elektronikeinheit (9) innerhalb eines die Pumpe (3) und den Elektromotor (8) aufnehmenden Gehäuses (21) oder an der Außenseite dieses Gehäuses (21) angeordnet ist, wobei das Verfahren einen Schritt des Messens eines Flüssigkeitsstandes (11) in dem Schacht (2) oder Behältnis, in welchem das Pumpenaggregat (1) angeordnet ist, umfasst, und der Schritt des Messens des Flüssigkeitsstandes (11) mittels Zeitbereichsreflektrometrie durchgeführt wird, indem durch die Elektronikeinheit (9) ein Signal in das Kabel (5) übertragen wird und ein Reflektionssignal an der Oberfläche (4) der im Schacht (2) oder Behältnis befindlichen Flüssigkeit (10) erfasst wird und hieraus mittels Zeitbereichsreflektrometrie ein Flüssigkeitsstand (11) in dem Schacht (2) oder Behältnis bestimmt wird, **dadurch gekennzeichnet, dass** eine in dem Pumpenaggregat (1) vorgesehene Elektronikeinheit (9) das Signal an das Kabel (5) sendet und die Zeit misst, die benötigt wird, bis eine Änderung der Amplitude des Signals in dem Kabel (5) auftritt und aus der gemessenen Zeit die Länge des Kabels (5) von dem Pumpenaggregat (1) bis zu der Flüssigkeits-/Luft-Grenze berechnet.

13. Verfahren nach Anspruch 12, **dadurch gekennzeichnet, dass** der Schritt des Messens des Flüssigkeitsstandes (11) ein Übertragen eines Signals, insbesondere eines Signals mit einer Amplitude von 5 V, in ein Stromkabel (5), welches das Pumpenaggregat (1) mit einer Stromquelle (7) verbindet, und ein Erfassen einer Änderung des übertragenen Signals an der Oberfläche (4) der Flüssigkeit (10) in dem Behältnis, insbesondere an der Flüssigkeits-/Luft-Grenze, umfasst.

14. Verfahren nach einem der Ansprüche 12 und 13, **dadurch gekennzeichnet, dass** der Schritt des Messens während eines Stillstands der Pumpe (3), während der erstmaligen Inbetriebnahme der Pumpe (3) oder während des Betriebs der Pumpe (3) durchgeführt wird.

15. Verfahren nach einem der vorhergehenden Ansprüche 12 bis 14, **dadurch gekennzeichnet, dass** eine Kalibrierung unter Zugrundelegung der am Kabel (5) angebrachten Marker (16) und deren bekannte Position am Kabel (5) erfolgt und dass diese Kalibrierung in zeitlichen Abständen selbsttätig wiederholt wird, wobei die ermittelten Werte in der Elektronikeinheit (9) gespeichert und bei den nachfolgenden Ermittlungen von Flüssigkeitsständen (11) verwendet werden.

16. Verfahren nach Anspruch 14, **dadurch gekennzeichnet, dass** die bei aufeinanderfolgenden Kalibriervorgängen ermittelten Werte verglichen und anhand des Vergleichs ein Eindringen von Flüssigkeit in das Kabel (5) oder ein Verbindungselement (13) einer Verbindungsschnittstelle (12) des Kabels (5) ermittelt wird.

17. Verfahren nach einem der Ansprüche 12 bis 16, **dadurch gekennzeichnet, dass** das Verfahren weiterhin einen Schritt des Detektierens eines Trockenlaufs der Pumpe (3) umfasst, wenn der ermittelte Flüssigkeitsstand (11) einen vorbestimmten Wert erreicht oder unterschreitet.

## Claims

1. A submersible pump unit (1) for arrangement in a shaft (2) or container, having a pump (3) and an electric motor (8) driving the same, having a cable (5) for power supply, which is designed for guiding out of the shaft (2) or container at the top and for connection to a power source (7) outside the shaft (2) or container, the pump unit (1) comprising an electronic unit (9), which is designed to transmit a signal into the cable (5) and to detect a reflection signal at the surface (4) of the liquid (10) located in the shaft (2) or container and to determine a liquid level (11) in the shaft (2) or container from that by means of time-domain reflectometry, **characterized in that** the electronic unit (9) is arranged inside a housing (21) accommodating the pump (3) and the electric motor (8) or on the outside of this housing (21).

2. The pump unit (1) according to claim 1, **characterized in that** the cable (5) is a standard power cable, made from copper in particular, and the signal coupling and decoupling takes place capacitively, preferably by means of a Y capacitor (22).

3. The pump unit (1) according to claim 1, **characterized in that** in addition to the electric conductors, at least one separate conductor is provided to the cable (5) for the signals and reflection signals required for the time-domain reflectometry, which conductor is preferably also used for data communication with an external motor control (14).

4. The pump unit (1) according to one of the preceding claims, **characterized in that** at least one marker (16), which can be detected by means of the time-domain reflectometry, preferably a metallic ring (16) is arranged on the cable (5).

5. The pump unit (1) according to claim 4, **characterized in that** at least one further marker (16', 16") is arranged on the cable (5) at a predetermined distance from the first marker (16).

6. The pump unit (1) according to one of claims 1 to 5, **characterized in that** the signal transmitted by the electronic unit (9) into the cable (5) is a coded pulse sequence.

7. The pump unit (1) according to one of claims 1 to 6, **characterized in that** the cable (5) has a first cable section (5') connected to the pump unit (1) and a second cable section (5") to be connected to the power source (7), wherein the first cable section (5') and the second cable section (5") are connected to one another by means of a connecting element (13) at a connection interface (12).

8. The pump unit (1) according to claim 7, **characterized in that** the pump unit (1) has means for detecting dry running of the pump (3) and/or the penetration of liquid into the connecting element (13), which are formed in the electronic unit (9) and which use the data determined using the time-domain reflectometry.

9. The pump unit according to one of claims 7 or 8, **characterized in that** the electronic unit (9) furthermore has means for determining a dielectric change at the connection interface (12) of the first and second cable section (5', 5") and/or means for compensating the dielectric change at the connection interface (12) of the first and second cable section (5', 5").

10. The pump unit (1) according to one of claims 1 to 8, **characterized in that** a cable end filter (19) is provided at one end of the cable (5), which is to be connected to the power source (7), and **in that** a frequency converter (14) and/or a motor control (17) is provided between the cable end filter (19) and the power source (7).

11. The pump unit (1) according to one of the preceding claims, **characterized in that** the electronic unit (9) has a communication unit, via which communication signals are fed into the cable (5) and can be received from the cable (5).

12. A method for operating a submersible pump unit (1) according to one of claims 1 to 11, the submersible pump unit having a pump (3) and an electric motor (8) driving the same, an electronic unit (9) and a cable (5) for power supply, which is designed for guiding out of a shaft (2) or container at the top and for connection to a power source (7) outside of the shaft (2) or container, and the electronic unit (9) is arranged inside a housing (21) accommodating the pump (3) and the electric motor (8) or on the outside of this housing (21), the method comprising a step of measuring a liquid level (11) in the shaft (2) or container, in which the pump unit (1) is arranged, and the step of measuring the liquid level (11) being carried out by means of time-domain reflectometry, in that a signal is transmitted into the cable (5) by the electronic unit (9) and a reflection signal is detected at the surface (4) of the liquid (10) located in the shaft (2) or container and a liquid level (11) in the shaft (2) or container is determined from that by means of time-domain reflectometry, **characterized in that** an electronic unit (9) provided in the pump unit (1) sends the signal to the cable (5) and measures the time that is required until a change of the amplitude of the signal in the cable (5) occurs and the length of the cable (5) from the pump unit (1) up to the liquid/air boundary is calculated from the time measured.

13. The method according to claim 12, **characterized in that** the step of measuring the liquid level (11) comprises transmitting a signal, particularly a signal with an amplitude of 5 V, into a power cable (5), which connects the pump unit (1) to a power source (7), and detecting a change of the transmitted signal at the surface (4) of the liquid (10) in the container, particularly at the liquid/air boundary.

14. The method according to one of claims 12 and 13, **characterized in that** the step of measurement is carried out during a stoppage of the pump (3), during the initial commissioning of the pump (3) or during the operation of the pump (3).

15. The method according to one of the preceding claims 12 to 14, **characterized in that** a calibration takes place on the basis of the markers (16) positioned on the cable (5) and the known position thereof on the cable (5) and **in that** this calibration is repeated automatically at time intervals, wherein the determined values are stored in the electronic unit (9) and used during the subsequent determination of liquid levels (11).

16. The method according to claim 14, **characterized in that** the values determined during successive calibration procedures are compared and penetration of liquid into the cable (5) or a connecting element (13) of a connection interface (12) of the cable (5) is determined on the basis of the comparison.

17. The method according to one of claims 12 to 16, **characterized in that** the method furthermore comprises a step of detecting dry running of the pump (3) if the detected liquid level (11) reaches or falls below a predetermined value.

## Revendications

1. Groupe de pompage (1) submersible destiné à être disposé dans un puits (2) ou dans un contenant, avec une pompe (3) et un moteur électrique (8) entraînant cette dernière, avec un câble (5) pour l'alimentation électrique qui est configuré pour être sortie du puits (2) ou du contenant par le haut et pour être relié à une source d'électricité (7) à l'extérieur du puits (2) ou du contenant, le groupe de pompage (1) comprenant une unité électronique (9) qui est configurée pour transmettre un signal dans le câble (5) et pour capter un signal de réflexion à la surface (4) du liquide (10) se trouvant dans le puits (2) ou dans le contenant et pour en déterminer, par la réflectométrie temporelle, un niveau de liquide (11) dans le puits (2) ou le contenant, **caractérisé en ce que** l'unité électronique (9) est disposée à l'intérieur d'un boîtier (21), ou sur la face extérieure de ce boîtier (21), recevant la pompe (3) et le moteur électrique (8).

2. Groupe de pompage (1) selon la revendication 1, **caractérisé en ce que** le câble (5) est un câble électrique standard, notamment en cuivre, et que le couplage d'entrée et de sortie du signal est effectué de façon capacitive, de préférence moyennant un condensateur en Y (22).

3. Groupe de pompage (1) selon la revendication 1, **caractérisé en ce que** dans le câble (5), outre les conducteurs de courant, au moins un conducteur pour les signaux et signaux de réflexion nécessaires à la réflectométrie temporelle est prévu qui est utilisé, de préférence, aussi pour la communication de données avec une commande externe de moteur (14).

4. Groupe de pompage (1) selon l'une des revendications précédentes, **caractérisé en ce qu'**au moins un marqueur (16), pouvant être détecté par la réflectométrie temporelle, de préférence un anneau métallique (16), est disposé sur la câble (5).

5. Groupe de pompage (1) selon la revendication 4, **caractérisé en ce qu'**au moins un autre marqueur (16', 16") est disposé sur le câble à une distance prédéterminée du premier marqueur (16).

6. Groupe de pompage (1) selon l'une des revendications 1 à 5, **caractérisé en ce que** le signal transmis par l'unité électronique (9) dans le câble (5), est une séquence d'impulsions codée.

7. Groupe de pompage (1) selon l'une des revendications 1 à 6, **caractérisé en ce que** le câble (5) comprend une première section de câble (5') reliée au groupe de pompage (1) et une deuxième section de câble (5") destinée à être reliée à la source d'électricité (7), la première section de câble (5') et la deuxième section de câble (5") étant connectées l'une à l'autre à une interface de connexion (12) moyennant un élément de connexion (13).

8. Groupe de pompage (1) selon la revendication 7, **caractérisé en ce que** le groupe de pompage (1) comprend des moyens de détection d'un fonctionnement à sec de la pompe (3) et/ou de pénétration d'un liquide dans l'élément de connexion (13), les moyens étant conçus dans l'unité électronique (9) et utilisant les données déterminées par la réflectométrie temporelle.

9. Groupe de pompage (1) selon l'une des revendications 7 ou 8, **caractérisé en ce que** l'unité électronique (9) comprend en outre des moyens pour déterminer un changement diélectrique à l'interface de connexion (12) des première et deuxième sections de câbles (5', 5") et/ou des moyens pour compenser le changement diélectrique à l'interface de connexion (12) des première et deuxième sections de câbles (5', 5").

10. Groupe de pompage (1) selon l'une des revendications 1 à 8, **caractérisé en ce qu'**à une extrémité du câble (5) destinée au raccordement à la source d'électricité (7), un filtre d'extrémité de câble (19) est prévu et **en ce qu'**entre le filtre d'extrémité de câble (19) et la source d'électricité (7) un transformateur de fréquence (14) et/ou une commande de moteur (17) est prévu(e).

11. Groupe de pompage (1) selon l'une des revendications précédentes, **caractérisé en ce que** l'unité électronique (9) comprend une unité de communication par laquelle des signaux de communication peuvent être entrés dans le câble (5) et reçus du câble (5).

12. Procédé de fonctionnement d'un groupe de pompage (1) submersible selon l'une des revendications 1 à 11, le groupe de pompage comprenant une pompe (3) et un moteur électrique (8) entraînant cette dernière, une unité électronique (9) et un câble (5) pour l'alimentation en électricité qui est configuré pour être sortie d'un puits (2) ou d'un contenant par le haut et pour être relié à une source d'électricité (7) à l'extérieur du puits (2) ou du contenant, et l'unité électronique (9) étant disposée à l'intérieur d'un boîtier (21), ou sur la face extérieure de ce boîtier (21), recevant la pompe (3) et le moteur électrique (8), le procédé comprenant une étape de mesurer un niveau de liquide (11) dans le puits (2) ou le contenant dans lequel le groupe de pompage (1) est disposé, et l'étape de mesurer le niveau de liquide (11) étant réalisée par réflectométrie temporelle par le fait qu'un signal est transmis par l'unité électronique (9) dans le câble (5) et qu'un signal de réflexion est capté à la surface (4) du liquide (10) se trouvant dans le puits (2) ou dans le contenant et qu'un niveau de liquide (11) dans le puits (2) ou le contenant est déterminé par la réflectométrie temporelle, **caractérisé en ce qu'**une unité électronique (9) prévue dans le groupe de pompage (1) envoie le signal au câble (5) et mesure le temps nécessaire jusqu'à un changement de l'amplitude du signal dans le câble (5) et calcule, à partir du temps mesuré, la longueur du câble (5) du groupe de pompage (1) jusqu'à la limite liquide/air.

13. Procédé selon la revendication 12, **caractérisé en ce que** l'étape de mesurer le niveau de liquide (11) comprend la transmission d'un signal, notamment d'un signal ayant une amplitude de 5 V, dans un câble d'électricité (5) qui relie le groupe de pompage (1) à une source d'électricité (7), et la saisie d'un changement du signal transmis à la surface (4) du liquide (10) dans le contenant, notamment à la limite liquide/air.

14. Procédé selon l'une des revendications 12 et 13, **caractérisé en ce que** l'étape de mesurer est mise en œuvre lorsque la pompe (3) est arrêtée, lors de la première mise en fonctionnement de la pompe (3) ou pendant le fonctionnement de la pompe (3).

15. Procédé selon l'une des revendications précédentes 12 à 14, **caractérisé en ce qu'**un calibrage est effectué sur la base des marqueurs (16) fixés sur le câble (5) et de leur position connue sur le câble (5) et que ce calibrage est répété automatiquement à des intervalles de temps, les valeurs déterminées étant enregistrées dans l'unité électronique (9) et étant utilisées lors des déterminations suivantes de niveaux de liquide (11).

16. Procédé selon la revendication 14, **caractérisé en ce que** les valeurs déterminées lors de calibrages successifs sont comparées et qu'une intrusion de liquide dans le câble (5) ou dans un élément de connexion (13) d'une interface de connexion (12) du câble (5) est déterminée.

17. Procédé selon l'une des revendications 12 à 16, **caractérisé en ce que** le procédé comprend en outre une étape de détection d'un fonctionnement à sec de la pompe (3) lorsque le niveau de liquide (11) déterminé atteint une valeur prédéterminée ou passe en-dessous.
